# EUROPÄISCHE PATENTSCHRIFT

(11) **EP 3 538 407 B1**
(45) Veröffentlichungstag und Bekanntmachung des Hinweises auf die Patenterteilung: **02.09.2020**
(21) Anmeldenummer: 17805131.4
(22) Anmeldetag: 13.11.2017
(51) Int. Cl.: B60T 11/26, B60T 11/22, B60T 17/06

(54) **FLUIDBEHÄLTER MIT EINEM STRÖMUNGSOPTIMIERTEN ANSCHLUSSSTUTZEN**
FLUID CONTAINER COMPRISING A FLOW-OPTIMISED CONNECTING PIECE
RÉSERVOIR DE FLUIDE DOTÉ D'UN RACCORD TUBULAIRE À ÉCOULEMENT AMÉLIORÉ

(30) Priorität: 11.11.2016 DE 102016222148
(43) Veröffentlichungstag der Anmeldung: 18.09.2019
(73) Patentinhaber: Continental Teves AG & Co. OHG, 60488 Frankfurt am Main (DE)
(72) Erfinder: OTTMANN, Swen, 60488 Frankfurt am Main (DE); RÜFFER, Manfred, 65843 Sulzbach (DE)
(86) Internationale Anmeldenummer: PCT/EP2017/079085
(87) Internationale Veröffentlichungsnummer: WO 2018/087371

(56) Entgegenhaltungen:
- EP-A1- 0 049 657
- DE-A1-102007 035 842
- DE-A1-102013 007 514

## Beschreibung

Die Erfindung betrifft einen Fluidbehälter mit den Merkmalen nach dem Oberbegriff des Anspruchs 1. Derartige Fluidbehälter mit Anschlussstutzen zur hydraulischen Versorgung von nachgeschalteten Aggregaten sind allgemein bekannt und in vielfältigen Ausprägungen und Ausführungsformen verbreitet.

Solche Fluidbehälter werden beispielsweise als Druckmittelbehälter für hydraulische Kraftfahrzeug-Bremsanlagen eingesetzt, wo sie insbesondere zur Versorgung von klassischen, an eine gesonderte Verstärkerstufe angekoppelten Hauptbremszylindern oder kombinierten, die Verstärkerstufe integrativ enthaltenden Druckerzeugungsaggregaten dienen. Die Fluidbehälter können dabei über Hydraulikleitungen mit dem nachschalteten Aggregat verbunden werden, meist werden sie jedoch unmittelbar an dem hydraulischen Aggregat befestigt. Dabei tragen die Anschlussstutzen neben ihrer Funktion als hydraulische Schnittstelle auch eine Befestigungsfunktion, indem sie in korrespondierenden Stutzenaufnahmen am angeschlossenen Aggregat aufgenommen werden und die Lagesicherung des Fluidbehälters im Fahrzeug ganz oder teilweise übernehmen.

Daher werden an die Geometrie und Form der Anschlussstutzen vielfältige Anforderungen gestellt. Zum einen muss ein ausreichend großer Querschnitt für einen einwandfreien Durchfluss des Druckmittels bei allen Betriebszuständen und Temperaturen zur Verfügung gestellt werden, zum anderen muss die Höhe bzw. axiale Länge des Anschlussstutzen und die Stabilität derart ausgelegt werden, dass dieser einen sicheren Halt und Abdichtung gewährleistet. Dabei soll die Herstellung möglichst einfach sein. Vor diesem Hintergrund haben sich insbesondere Anschlussstutzen nach Art der zylindrischen Ansatzrohre etabliert. Insbesondere die modernen hochautomatisierten und hochdynamischen Bremsaggregate benötigen innerhalb relativ kurzer Zeitabschnitte relativ große Mengen an nachlaufendem Druckmittel, was zu hohen Volumenströmen und Durchflussgeschwindigkeiten in den Anschlussstutzen führt. Hohe Volumenströme bei hohen Durchflussgeschwindigkeiten können in den bekannten, relativ schmalen zylindrischen Anschlussstutzen diverse negative Effekte verursachen. Dazu gehören beispielsweise Verwirbelungen an der Mündungskante des Anschlussstutzen in der Innenkammer und dadurch eine erhöhte innere Fluidreibung, somit ein höherer Widerstand, eine Entstehung von Kavitationsbereichen mit einhergehenden Geräuscherzeugung und Bildung von Gasbläschen, eine Bildung von Einlaufstrudeln in den Innenkammern des Fluidbehälters, welche die Luft einschleppen und gegebenenfalls andere Komponenten wie Schwimmer von Sensorvorrichtungen negativ beeinflussen können. Zum relevanten Stand der Technik wird herbei beispielhaft auf DE 10 2007 035 842 A1 verwiesen.

Aus DE 10 2007 037 252 A1 ist bekannt, die Mündungskante des Anschlussstutzens leicht zu verrunden, um das Strömungsverhalten zu verbessern und den vorgenannten negativen Effekten zu begegnen. Durch eine derartige Kantenentschärfung kann jedoch eine nur relativ geringe Verbesserung erreicht werden. Ein weiterer zu beachtender Aspekt ist, das sich in einem Druckmittelbehälter mit der Zeit Schmutzpartikel sammeln und ablagern können. Der Zugang von Schmutz zum nachgeschalteten Aggregat soll möglichst verringert oder verhindert werden, eine derartige Verrundung verhindern dies nicht und kann es sogar begünstigen, weil der Schmutz von dem umliegenden Wandungsbereich des Fluidbehälters durch die Strömung abgesaugt und mitgeschleppt wird.

Es stellt sich somit eine Aufgabe, einen verbesserten Fluidbehälter vorzuschlagen, mit dem die vorstehend genannten Nachteile und die negativen Effekte auch bei hohen Volumenströmen und Durchflussgeschwindigkeiten durch den Anschlussstutzen verhindert oder zumindest reduziert werden.

Die Aufgabe wird erfindungsgemäß mit einem Fluidbehälter mit der Merkmalskombination nach Anspruch 1 gelöst. Unteransprüche geben weitere erfindungsgemäße Ausführungen und Weiterbildungen an. Die Erfindung sieht vor, dass der Anschlussstutzen mit einer Ausflusszahl µ größer als 0,82, ausgebildet ist und sein Mündungsabschnitt zumindest bereichsweise gegenüber einem den Mündungsabschnitt unmittelbar umgebenden Behälterwandungsbereich in Richtung Innenkammer erhoben gestaltet ist.

Dadurch wird neben einer besonders hohe Strömungsoptimierung durch Bildung eines breiten Einlauftrichters erreicht und zugleich eine Art Damm gebildet, mit dem das Ansaugen von abgelagerten Verunreinigungen in den Anschlussstutzen verhindert.

Zu diesem Zweck weist der Mündungsabschnitt eine umlaufende Wulst auf, welche an den Behälterwandungsbereich angrenzt und gegenüber diesem in Richtung Innenkammer erhoben ist.

Hierdurch wird die Herstellbarkeit des Fluidbehälters nicht erschwert und die Festigkeit im mechanisch hochbelasteten Bereich der Anbindung des Anschlussstutzens an den Fluidbehälter durch den günstigeren Kraftflussverlauf erhöht.

Die Erfindung sieht weiter vor, dass der Mündungsabschnitt in seinem Axialschnitt ein besonders strömungsgünstiges konkaves Innenprofil aufweist.

Für eine besonders einfache Herstellung, Maximierung des Durchflussquerschnitts, eine vereinfachte Abdichtbarkeit und hohe Stabilität des Anschlussstutzens sieht die Erfindung des Weiteren vor, dass der Anschlussstutzen im Wesentlichen rotationssymmetrisch um eine Längsachse L ausgebildet ist.

Um das Fluid aus dem Fluidbehälter trotz der erhabenen Form des Mündungsabschnitts dennoch vollständig ausschöpfen zu können, ist es in einer erfindungsgemäßen Ausführungsform vorgesehen, dass in der Wulst wenigstens ein Einschnitt angeordnet ist, welcher axial zum Behälterwandungsbereich gerichtet ist und die Wulst in radiale Richtung durchschneidet. Damit wird eine Fluidpassage quer durch die Wulst hindurch auch bei Absinken des Fluidfüllstandes unter das Niveau des oberen Wulstrandes ermöglicht.

Gemäß einer anderen Weiterbildung kann der Anschlussstutzen einen Schaftbereich mit wenigstens einem radial nach außen gerichtet ausgebildeten Kragen zur axialen Fixierung eines elastomeren Dichtstopfens aufweisen, womit eine zuverlässige und effektive abdichtende Fixierung an des Anschlussstutzens in einem an dem Anschlussstutzens angeschlossenen Bauteil, beispielsweise einem Hydraulikaggregat, einem Adapter, oder einem Fitting einer Hydraulikleitung ermöglicht wird.

Gemäß einer bevorzugten Ausführungsform der Erfindung ist der Fluidbehälter als Druckmittelbehälter einer hydraulischen Kraftfahrzeugbremsanlage ausgebildet, wobei der Anschlussstutzen zur Speisung einer Druckkammer in dem Hydraulikaggregat mit einem hydraulischen Druckmittel vorgesehen ist.

Gemäß einer Weiterbildung der Erfindung kann der Fluidbehälter auch zwei oder mehr äquivalent gestalteten Anschlussstutzen aufweisen.

Dabei kann das Hydraulikaggregat gemäß einer besonders bevorzugten Ausführungsform ein Aggregat zur Erzeugung von hydraulischem Bremsdruck in der Kraftfahrzeugbremsanlage sein, beispielsweise ein Hauptbremszylinder oder ein fremdangetriebenes Druckerzeugungsaggregat mit einer integrierten Verstärkerstufe sein.

Weitere Merkmale, Vorteile und Anwendungsmöglichkeiten der Erfindung gehen aus der nachfolgenden Beschreibung eines erfindungsgemäßen Ausführungsbeispiels hervor. Hierbei zeigen:
Fig.1 beispielhaft eine vereinfachte Darstellung einer Ausführung des erfindungsgemäßen Fluidbehälters als Druckmittelbehälter für eine hydraulische Kraftfahrzeugbremsanlage.
Fig.2 eine vergrößerte Schnittdarstellung des Anschlussstutzens der Ausführung gemäß Fig.1

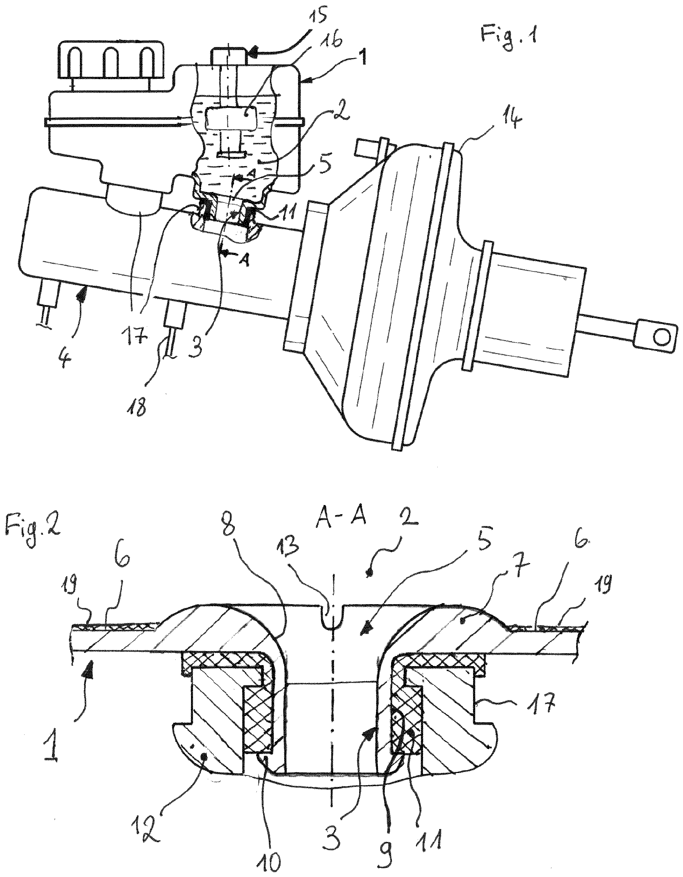

Fig.1 Der erfindungsgemäße Fluidbehälter 1 ist in der gezeigten Ausführungsform als ein Druckmittelbehälter ausgebildet und unmittelbar an einem Hydraulikaggregat 4 zur Erzeugung vom hydraulischen Bremsdruck in einer hydraulischen Kraftfahrzeugbremsanlage angeordnet. Der Fluidbehälter 1 ist relativ dünnwandig aus Kunststoff ausgebildet und weist eine mit einem fluiden Druckmittel befüllte Innenkammer 2 auf. Ein innen hohler, mit seinem Mündungsabschnitt 5 in die Innenkammer 3 mündender Anschlussstutzen 3 ermöglicht eine hydraulische Verbindung zwischen der Innenkammer 2 und einer nicht gezeigten, im Inneren des Hydraulikaggregats 4 angeordneten Kammer mit einem veränderbaren Volumen, bei dessen Volumenverkleinerung das Druckmittel aus der Innenkammer 2 durch den Anschlussstutzen 3 angesaugt wird. Eine Hydraulikleitung 18 verbindet das Hydraulikaggregat 4 mit einer ebenfalls nicht gezeigten Radbremse oder einem anderen, zwischengeschalteten Hydraulikaggregat. Der Anschlussstutzen 3 ist in einer am Hydraulikaggregat 4 angeformten Stutzenaufnahme 17 aufgenommen und mittels eines elastomeren Dichtstopfens 11 darin abdichtend fixiert.

In der gezeigten Ausführungsform weist der Fluidbehälter 1 insgesamt zwei äquivalent ausgeführten Anschlussstutzen 3, wobei zur Vereinfachung nur einer davon gezeigt ist. Abweichende Anzahl und/oder gegebenenfalls Verhältnis der Anschlussstutzen zueinander ist innerhalb der Erfindung weiter hin zulässig.

Des Weiteren kann innerhalb der Innenkammer 2 eine Sensorvorrichtung 15 angeordnet sein, welche beispielsweise anhand eines als Schwimmer 16 ausgebildeten Gebers die den Fluidfüllstand überwacht.

Fig.2 Die Fig.2 zeigt im den Anschlussstutzen 3 nach der Fig.1 im Schnitt A-A. Der Anschlussstutzen 3 ist im Wesentlichen rotationssymmetrisch um seine Längsachse L ausgebildet. Er verfügt über einen Mündungsabschnitt 5, mit dem er in die Innenkammer 2 mündet und einen rohrförmigen, zylindrischen Schaftbereich 9, an welchem der Dichtstopfen 11 anliegt. Ein im Schaftbereich radial nach außen gerichtet ausgebildeter Kragen 10 verhindert das Abrutschen des Dichtstopfens 11 von dem Anschlussstutzen 3. Der Anschlussstutzen 3 ist mit seinem Schaftbereich 9 innerhalb der korrespondierenden Stutzenaufnahme 17 positioniert, dabei dient der Dichtstopfen 11 zur Abdichtung der vorliegenden Schnittstelle und zur Fixierung des Anschlussstutzens 3 in der Stutzenaufnahme 17, somit auch zur Lagesicherung des gesamten Fluidbehälters 1. Die Stutzenaufnahme 17 kann dabei grundsätzlich in einem beliebigen Bauteil 12 angeordnet sein. Im gezeigten Ausführungsbeispiel repräsentiert das Hydraulikaggregat 4 selbst das Bauteil 12, wobei es innerhalb der Erfindung durchaus zulässig ist, dass das Bauteil 12 beispielsweise eine hydraulische Leitung, ein Adapter, ein Fitting und Dergleichen sein kann.

Grundsätzlich wird in der Fluidmechanik zur Charakterisierung von der Strömungsqualität von Ausflussöffnungen eine Ausflusszahl µ verwendet, welche den Anteil eines tatsächlichen Volumenstroms durch die Öffnung zum theoretisch möglichen Volumenstrom angibt. Dabei gilt, je niedriger die Ausflusszahl µ ist, umso größer ist der Verlust und umso schlechter ist die Hydrodynamik und die Strömungsqualität. Die Ausflusszahl µ nimmt für unterschiedliche Ausflussöffnungsformen bestimmte charakteristische Werte ein und beträgt beispielsweise für ein einfaches zylindrisches Ansatzrohr mit einem Länge/Durchmesser-Verhältnis von 2 bis 3 und scharfen Kanten µ=0,82 bzw. 82%. Dies bedeutet im Umkehrschluss 18% Verlust des Volumenstroms für diese bestimmte Formgeometrie der Ausflussöffnung.

Um die Ausflusszahl µ zwecks Verbesserung von Hydrodynamik durch Verringerung von Strömungswiderständen zu erhöhen, ist der Mündungsabschnitt 5 im Wesentlichen trichterförmig mit einem relativ weiten, radial weit gestreckten Trichter ausgebildet. Zur Realisierung dieser Form weist der Mündungsabschnitt 5 eine umlaufende Wulst 7 auf, welche an den im Wesentlichen flachen, den Anschlussstutzen 3 umgebenden Behälterwandungsbereich 6 angrenzt und gegenüber diesem in Richtung Innenkammer 2 erhoben ist. Das Innenprofil 8 des Mündungsabschnitts 5 ist in seinem Axialschnitt durch die Längsachse L dadurch konkav ausgebildet und weist einen wesentlich größeren Radius auf, als es bei einer einfachen Kantenverrundung möglich wäre, ist damit besonders strömungsgünstig gestaltet. Durch diese Formgebung kann eine Ausflusszahl µ im Bereich 0,97-0,99 erreicht und somit Strömungsverluste auf 1-3 reduziert werden.

Durch die gegenüber dem umliegenden Behälterwandungsbereich 6 erhabene Gestaltung des Mündungsabschnitts 5 wird zudem erreicht, dass die im Fluidbehälter 1 abgelagerte Schmutzschicht 19 nicht durch die Strömung mitgerissen und in den Anschlussstutzen 3 eingesaugt wird, weil die Wulst 7 dabei als eine Art Damm wirkt.

Damit das Fluid aus dem Fluidbehälter 1 in bestimmten Bedarfsfällen dennoch vollständig ausgeschöpft werden kann - beispielsweise für eine Notbremsung bei einer Systemundichtigkeit und Fluidverlust, kann ein Einschnitt 13 vorgesehen werden, welcher die Wulst 7 in radiale Richtung wie eine Nut durchschneidet und axial bis zum Behälterwandungsbereich 6 getrieben ist. Durch den Einschnitt 13 können auch die letzten Fluidreste in den Anschlussstutzen 3 gelangen. Durch die relativ schmale Breite des Einschnitts 13 bleibt die Menge an mit eingetragenen Verunreinigungen aus der Schmutzschicht 19 im regulären Betrieb jedoch vernachlässigbar gering.

### Bezugszeichenliste

- 1: Fluidbehälter
- 2: Innenkammer
- 3: Stutzen
- 4: Hydraulikaggregat
- 5: Mündungsabschnitt
- 6: Behälterwandungsbereich
- 7: Wulst
- 8: Innenprofil
- 9: Schaftbereich
- 10: Kragen
- 11: Dichtstopfen
- 12: Bauteil
- 13: Einschnitt
- 14: Verstärkerstufe
- 15: Sensorvorrichtung
- 16: Schwimmer
- 17: Stutzenaufnahme
- 18: Hydraulikleitung
- 19: Schmutzschicht
- µ: Ausflusszahl
- L: Längsachse

## Patentansprüche

1. Fluidbehälter (1) mit wenigstens einer Innenkammer (2) zur Aufnahme eines Fluides und mit wenigstens einem Anschlussstutzen (3) zur hydraulischen Verbindung der Innenkammer (2) mit einem nachgeschalteten Hydraulikaggregat (4), wobei der Anschlussstutzen (3) an seinem innerkammerseitigen Ende einen Mündungsabschnitt (5) aufweist **dadurch gekennzeichnet, dass** der Mündungsabschnitt (5) im Wesentlichen trichterförmig mit einer den Mündungsabschnitt (5) umlaufenden Wulst (7) ausgebildet ist, welche an einen den Mündungsabschnitt (5) unmittelbar umgebenden Behälterwandungsbereich (6) angrenzt und gegenüber diesem in Richtung Innenkammer (2) erhoben gestaltet ist, so dass der Anschlussstutzen (3) eine Öffnungsform mit einer Ausflusszahl (µ) größer als 0,82 aufweist.

2. Fluidbehälter (1) nach Anspruch 1 **dadurch gekennzeichnet, dass** der Mündungsabschnitt (5) in seinem Axialschnitt einen konkaven Innenprofil (8) aufweist.

3. Fluidbehälter (1) nach wenigstens einem der vorstehenden Ansprüche **dadurch gekennzeichnet, dass** der Anschlussstutzen (3) im Wesentlichen rotationssymmetrisch um eine Längsachse L ausgebildet ist.

4. Fluidbehälter (1) nach wenigstens einem der vorstehenden Ansprüche **dadurch gekennzeichnet, dass** in der Wulst (7) wenigstens ein Einschnitt (13) angeordnet ist, welcher axial zum Behälterwandungsbereich (6) gerichtet ist und die Wulst (7) in radiale Richtung durchschneidet.

5. Fluidbehälter (1) nach wenigstens einem der vorstehenden Ansprüche **dadurch gekennzeichnet, dass** der Anschlussstutzen (3) einen Schaftbereich (9) mit wenigstens einem radial nach außen gerichtet ausgebildeten Kragen (10) zur axialen Fixierung eines elastomeren Dichtstopfens (11) an dem Anschlussstutzen (3) aufweist, wobei der Dichtstopfen (11) zur Abdichtung einer Schnittstelle zwischen dem Anschlussstutzen (3) und einem an dem Anschlussstutzens (3) angeschlossenen Bauteil (12) vorgesehen ist.

6. Fluidbehälter (1) nach Anspruch 5 **dadurch gekennzeichnet, dass** das Bauteil (12) das Hydraulikaggregat (4) ist.

7. Fluidbehälter (1) nach wenigstens einem der vorstehenden Ansprüche **dadurch gekennzeichnet, dass** der Fluidbehälter (1) als Druckmittelbehälter einer hydraulischen Kraftfahrzeugbremsanlage und der Anschlussstutzen (3) zur Speisung einer Druckkammer in dem Hydraulikaggregat (4) mit einem hydraulischen Druckmittel ausgebildet sind.

8. Fluidbehälter (1) nach Anspruch 7 **dadurch gekennzeichnet, dass** das Hydraulikaggregat (4) ein Aggregat zur Erzeugung von hydraulischen Bremsdruck in der Kraftfahrzeugbremsanlage ist.

9. Fluidbehälter (1) nach wenigstens einem der vorstehenden Ansprüche **dadurch gekennzeichnet, dass** der Fluidbehälter (1) zwei äquivalent gestaltete Anschlussstutzen (3) aufweist.

## Claims

1. Fluid container (1) having at least one internal chamber (2) for receiving a fluid, and having at least one connector (3) for hydraulically connecting the internal chamber (2) to a downstream hydraulic apparatus (4), wherein the connector (3) at the end thereof toward the internal chamber has a mouth portion (5), **characterized in that** the mouth portion (5) is configured so as to be substantially funnel-shaped having a bead (7) which encircles the mouth portion (5) and which is contiguous to a container wall region (6) that directly surrounds the mouth portion (5) and in relation to the said container wall region (6) is designed so as to be raised in the direction of the internal chamber (2) such that the connector (3) has an opening shape with an escape value (µ) of more than 0.82.

2. Fluid container (1) according to Claim 1, **characterized in that** the mouth portion (5) in the axial section thereof has a concave internal profile (8) .

3. Fluid container (1) according to at least one of the preceding claims, **characterized in that** the connector (3) is configured so as to be substantially rotationally symmetrical about a longitudinal axis L.

4. Fluid container (1) according to at least one of the preceding claims, **characterized in that** at least one recess (13) which is directed so as to be axial to the container wall region (6) and intersects the bead (7) in the radial direction is disposed in the bead (7).

5. Fluid container (1) according to at least one of the preceding claims, **characterized in that** the connector (3) has a shaft region (9) having at least one collar (10) for axially fixing an elastomeric sealing plug (11) on the connector (3) which collar is configured so as to be directed in a radially outward manner, wherein the sealing plug (11) is provided for sealing an interface between the connector (3) and a component (12) that is connected to the connector (3).

6. Fluid container (1) according to Claim 5, **characterized in that** the component (12) is the hydraulic apparatus (4).

7. Fluid container (1) according to at least one of the preceding claims, **characterized in that** the fluid container (1) is configured as a pressurizing medium container of a hydraulic motor vehicle brake system, and the connector (3) is configured for feeding a pressurized chamber in the hydraulic apparatus (4) with a hydraulic pressurizing medium.

8. Fluid container (1) according to Claim 7, **characterized in that** the hydraulic apparatus (4) is an apparatus for generating a hydraulic braking pressure in the motor vehicle brake system.

9. Fluid container (1) according to at least one of the preceding claims, **characterized in that** the fluid container (1) has two connectors (3) of equivalent design.

## Revendications

1. Contenant de fluide (1) muni d'au moins une chambre intérieure (2) pour la réception d'un fluide et muni d'au moins un manchon de raccordement (3) pour la liaison hydraulique de la chambre intérieure (2) avec un groupe hydraulique (4) connecté en aval, le manchon de raccordement (3) comprenant une section d'embouchure (5) au niveau de son extrémité située du côté de la chambre intérieure, **caractérisé en ce que** la section d'embouchure (5) est configurée essentiellement en forme d'entonnoir avec un bourrelet (7) encerclant la section d'embouchure (5), qui est adjacent à une zone de paroi de contenant (6) entourant directement la section d'embouchure (5) et est configuré sous forme surélevée par rapport à celle-ci dans la direction de la chambre intérieure (2), de telle sorte que le manchon de raccordement (3) présente une forme d'ouverture avec un coefficient de débit (µ) supérieur à 0,82.

2. Contenant de fluide (1) selon la revendication 1, **caractérisé en ce que** la section d'embouchure (5) présente un profilé intérieur concave (8) dans sa coupe axiale.

3. Contenant de fluide (1) selon au moins l'une quelconque des revendications précédentes, **caractérisé en ce que** le manchon de raccordement (3) est configuré sous forme essentiellement symétrique par rotation autour d'un axe longitudinal L.

4. Contenant de fluide (1) selon au moins l'une quelconque des revendications précédentes, **caractérisé en ce qu'**au moins une incision (13) est agencée dans le bourrelet (7), qui est orientée axialement par rapport à la zone de paroi de contenant (6) et sectionne le bourrelet (7) dans la direction radiale.

5. Contenant de fluide (1) selon au moins l'une quelconque des revendications précédentes, **caractérisé en ce que** le manchon de raccordement (3) comprend une zone de tige (9) avec au moins un col (10) configuré sous forme orientée radialement vers l'extérieur pour la fixation axiale d'un bouchon d'étanchéité élastomère (11) sur le manchon de raccordement (3), le bouchon d'étanchéité (11) étant prévu pour l'étanchéification d'une jonction entre le manchon de raccordement (3) et un composant (12) raccordé au manchon de raccordement (3) .

6. Contenant de fluide (1) selon la revendication 5, **caractérisé en ce que** le composant (12) est le groupe hydraulique (4).

7. Contenant de fluide (1) selon au moins l'une quelconque des revendications précédentes, **caractérisé en ce que** le contenant de fluide (1) est configuré en tant que contenant de moyen de pression d'une unité de freinage de véhicule automobile hydraulique et le manchon de raccordement (3) est configuré pour l'alimentation d'une chambre de pression dans le groupe hydraulique (4) avec un moyen de pression hydraulique.

8. Contenant de fluide (1) selon la revendication 7, **caractérisé en ce que** le groupe hydraulique (4) est un groupe pour la génération d'une pression de freinage hydraulique dans l'unité de freinage de véhicule automobile.

9. Contenant de fluide (1) selon au moins l'une quelconque des revendications précédentes, **caractérisé en ce que** le contenant de fluide (1) comprend deux manchons de raccordement (3) conçus de manière équivalente.
